# EUROPEAN PATENT APPLICATION

(11) **EP 1 605 666 A1**
(43) Date of publication of application: **14.12.2005**
(21) Application number: 05105006.0
(22) Date of filing: 08.06.2005
(51) Int. Cl.: H04L 29/06, H04L 12/28

(54) **Method for the transmission and reception of data, and related apparatus**

(30) Priority: 09.06.2004 IT UD20040123
(71) Applicant: A.I.B.S. Lab Srl, 34148 TRIESTE (IT)
(72) Inventor: Mumolo, Enzo, 34019, TRIESTE (IT); Budai, Alessandro, 34100, TRIESTE (IT); Mottica, Matteo, 34016, TRIESTE (IT); Basiaco, Antonio, 34148, TRIESTE (IT); Labinjan, Tomislav, 52423, KAROJBA (HR)
(74) Representative: Petraz, Gilberto Luigi

(57) **Abstract**

Apparatus (10) and method (40) for the transmission and reception of data between a first electronic device (11) and a second electronic device (111). The apparatus (10) comprises one or more connections (16), connection devices (13) and a selection unit (12). Each of the connections (16) comprises a plurality of communication channels (22, 23, 24, 25) having a corresponding plurality of respective communication protocols which achieve the transmission and reception of data between the first electronic device (11) and the second electronic device (111). The selection unit (12) selectively activates one or the other of the communication channels (22, 23, 24, 25) according at least to the band required for transmission, or to the security required for the transmission of the data, or to the availability of the connection (16) and/or of the connection devices (13).

## Description

### FIELD OF THE INVENTION

The present invention concerns an apparatus for the transmission and reception of data comprising two or more devices, such as for example electronic calculators, or suchlike, able to communicate with each other by means of connections through communication channels, via cable, radio or suchlike, and according to corresponding communication protocols. The invention also concerns a method in which the apparatus is used, for the transmission and reception of data between the above devices.

### BACKGROUND OF THE INVENTION

Apparatuses for the transmission and reception of data are known, comprising two or more devices able to communicate with each other by means of a distant connection, for example via radio bridge or wire, such as a fiber optic. The devices connected by the line of communication can substantially be assimilated to electronic calculators, or similar devices, for example dedicated to cell phone systems.

It is known that two or more devices can communicate with each other by means of a connection achieved with one or more data networks, such as for example Ethernet, Token Ring, Wireless LAN, or suchlike.

It is also known that two or more devices and/or networks can be connected to each other by means of fixed or mobile communication channels. The first belong to, or can be assimilated to, those of the fixed telephone network (ISDN, ADSL, or suchlike), the second to those of the mobile or radio mobile telephone network (TACS, GSM, GPRS, UMTS, or suchlike).

These types of connections are also called point-to-point, since they use communication channels that are exclusively reserved for communication between two or more devices and/or data networks.

It is also known that two or more devices and/or data networks can be connected to each other by means of intermediate data networks, such as for example Internet, intranet, or suchlike. This type of connection can be defined a point-to-point connection, based on a ciphering of the data to be transmitted, achieving for example a VPN (Virtual Private Network).

The above types of connection follow respective communication protocols, able to allow and guarantee communication between the devices and/or the data networks.

One disadvantage of conventional communication apparatuses, particularly in mobile transmissions, is that they can normally manage only one type of connection and relative protocol to allow communication between the devices and/or data networks. Consequently, if the connection is interrupted, conventional methods possibly allow only an attempt to restore the connection, but they do not allow to select an alternative one, for example to have a better network coverage, or to have a greater band width in the case of a transmission of a high quantity of data.

One purpose of the invention is to achieve an apparatus and to perfect a relative method which allow a reliable communication between two or more devices by means of a connection, even in the event that the latter is interrupted, providing the possibility to select, from a plurality of alternative connections, the one most suitable for the specific transmission situation.

Another disadvantage of fixed communication channels in the state of the art is that of physically constraining the device to the place where said channel is provided. Vice versa, mobile communication channels allow transmission between mobile devices, but have the disadvantage that they allow connections with lower reception-transmission speeds than those of fixed communication channels.

As is known, the speed of transmission/reception depends mainly on the type of connection, and in general the communication channels, both mobile and fixed, that allow the greatest speeds of transmission/reception, that is, belonging to the most evolved types of connection, have the disadvantage that they are mainly available in places with high population density, or in those where there is a high demand for one of these types of connection.

Another purpose of the invention is to make available speeds substantially equivalent to those of the connections with greater transmission/reception speed also in places where the latter are not available.

Another purpose is to increase the security of the connection, reducing the probability of interception of the data transmitted between the devices.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above purposes, an apparatus for the transmission and reception of data according to the present invention, between at least a first device and at least a second device, comprises connection means and selection means.

The connection means and the selection means are activated according to a method comprising at least a connection step, during which a connection is activated between the devices by means of the connection means, and a verification step, during which it is verified if the connection is active.

According to a characteristic of the present invention, each of the connections that can be activated between the said two devices comprises a plurality of communication channels having a corresponding plurality of respective communication protocols.

According to another characteristic, the method also comprises a selection step, in which a specific communication protocol is selected from said plurality of respective communication protocols by the selection means. This specific protocol is selected according to one and/or the other of the following parameters: the band required for transmission, the security required for the transmission of the data, the availability of said connections.

In this way, the present invention allows to manage a plurality of connections, each one comprising one or advantageously more communication channels. Each of said connections can selectively be activated according to the characteristics of the connection itself and conditions and parameters that can be defined in advance.

Moreover, said connections can advantageously use communication channels of different types, that is, both fixed and mobile. In this way continuity of the communication between said devices is guaranteed, even in the case of inactivity, even temporary, of one of said connections.

According to a preferential embodiment, the selection step provides the connection step, so as to allow the selective choice of the type of connection. Moreover, if during the verification step it is found that the connection is not active, that is, in the event of a negative verification, after the verification step there follows in any case another selection step, so as to try to restore the same connection previously activated, or, alternatively, to choose and activate a different connection, with characteristics that are more responsive to the specific requirements of the transmission in progress and/or the transmission zone.

According to another solution, the data define a flow of information which, during the connection step, is subdivided into a number of sub-flows of information, substantially equal to the number of communication channels, so that each of the communication channels is able to receive/transmit one of said sub-flows of information.

In this way, according to another feature, the invention allows relatively high speeds of transmission/reception, even when only mobile communication channels are used, thanks to the use of several communication channels and to the sub-division of the flow of information into several sub-flows of information.

Moreover, it increases the security of the data transmitted, since it reduces the probability of interception and re-composition of the entire flow of information, since the latter is sub-divided between the various communication channels.

According to another solution of the invention, the connection step comprises at least a sub-step during which the flow of information is subjected to encryption, so as to increase the security of the connection. Moreover, given that the speed of transmission/reception is relatively high, the encryption of the flow of information advantageously also provides an increase in the redundancy of the flow, in order to further increase the security of the connection.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view of an apparatus for the transmission/reception of data according to the present invention;
- fig. 2 is a schematic view of a detail of fig. 1;
- fig. 3 shows a method for the transmission/reception of data according to the present invention;
- fig. 4 shows a variant of the method in fig. 3.

### DETAILED DESCRIPTION OF A PREFERENTIAL FORM OF EMBODIMENT

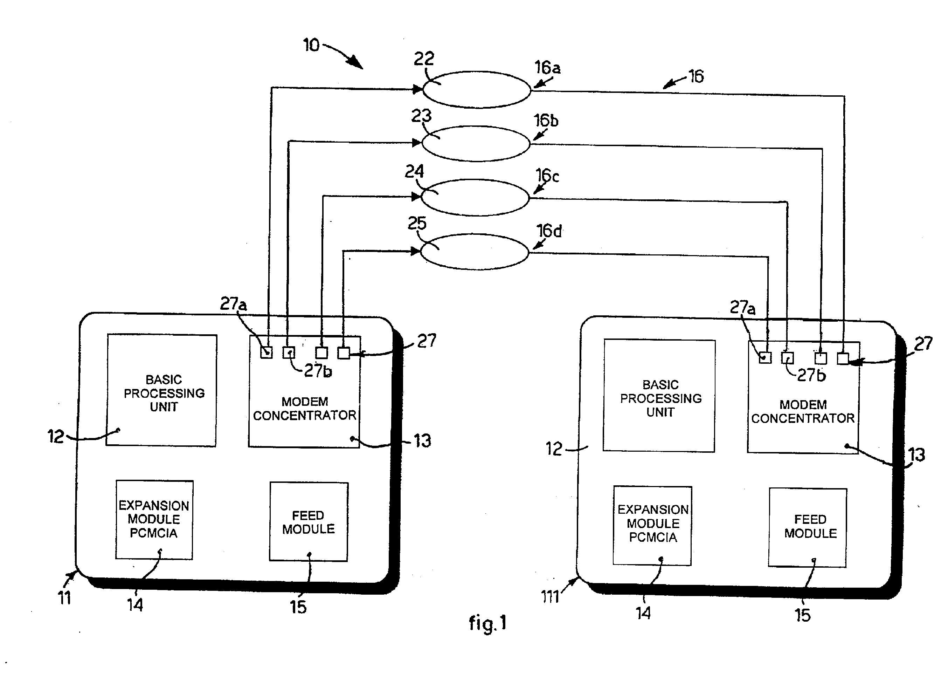

With reference to fig. 1, an apparatus 10 for the transmission/reception of data according to the present invention between a first electronic device 11 and a second electronic device 111 comprises a processing unit 12, a modem concentrator 13, an expansion module 14 and a feed module 15 able to feed the respective electronic device 11 or 111.

The processing unit 12 comprises at least a microprocessor and at least a memory, not shown, and is able to manage and control the modem concentrator 13 and the expansion module 14 and to process the data received from these and the data to be transmitted to them. The expansion module 14 can comprise, in a preferential embodiment, a connection interface (not shown) to connect with other apparatuses, for example electronic calculators, data networks or similar apparatuses, for the exchange of data.

The modem concentrator 13 comprises, to give an example, four connection devices 27 able to selectively achieve, by means of four respective connections 16a, 16b, 16c and 16d, a communication between the first electronic device 11 and the second electronic device 111.

Each connection 16 between the first electronic device 11 and the second electronic device 111 respectively comprises one or more communication channels 22, 23, 24 and 25, each of which is advantageously characterized by a respective communication protocol.

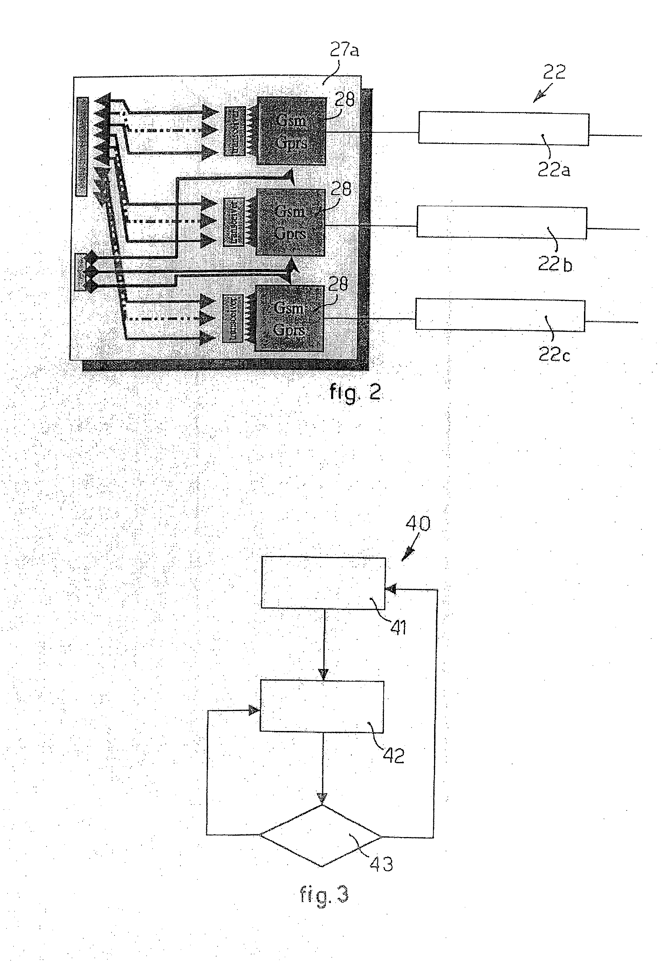

To give a non-restrictive example, the first connection 16a comprises three channels 22a, 22b and 22c (fig. 2), which correspond to three communication channels of a radio mobile system, which in this case is GSM. In this case the communication protocol is the one provided by the GSM system and consequently the modem concentrator 13 comprises a GSM connection device 27a having three modules 28, of a conventional type, each of which is able to implement said communication protocol.

To manage the first connection 16a, the processing unit 12 implements a method 40 which provides a connection step 42 (fig. 3) during which the first connection 16a is activated between the two electronic devices 11 and 111, according to the communication protocol provided.

In this way the first electronic device 11 and the second electronic device 111 achieve a connection 16a by means of three communication channels 22 of a conventional type, and in particular the GSM system, offering a speed of transmission/ reception equal to three times the speed of a single communication channel of the GSM system, that is, equal to about 30kbit/s in all. Thanks to the fact that the GSM system is extremely widespread over the territory, in this way it is possible, substantially everywhere, to obtain speeds of transmission/ reception typical of more evolved mobile systems even in those places where they are not available.

Subsequently the processing unit 12 performs a verification step 42 during which it is verified if the first connection 16a is active, or not. In this last case, that is, if the verification is negative, the processing unit 12 performs a selection step 41 between the connections 16a, 16b, 16c and 16d, wherein one of these is selected according to determinate conditions and parameters which can be defined in advance. Some of these conditions and parameters are the speed of transmission/reception, the security required for the connection, the availability of a connection.

In this way the invention keeps the communication between the first and the second electronic devices 11 and 111 active even in the event of inactivity of the first connection 16a, since the processing unit 12, autonomously and according to the aforesaid conditions and parameters, searches for an alternative connection, selecting the one that best satisfies the conditions and parameters sought.

To give another example, the second connection 16b (fig. 1) comprises a channel 23, belonging to a fixed telephone system, such as for example ADSL. In this case, the communication protocol is the one provided by said telephone system and, consequently, the modem concentrator 13 comprises an ADSL connection device 27b having a module, of a conventional type and not shown here, able to implement said communication protocol. Moreover, the third and fourth connection 16c and 16d comprise respectively, for example, one or more channels belonging to a radio mobile system such as UMTS and one or more channels of a traditional fixed telephone system.

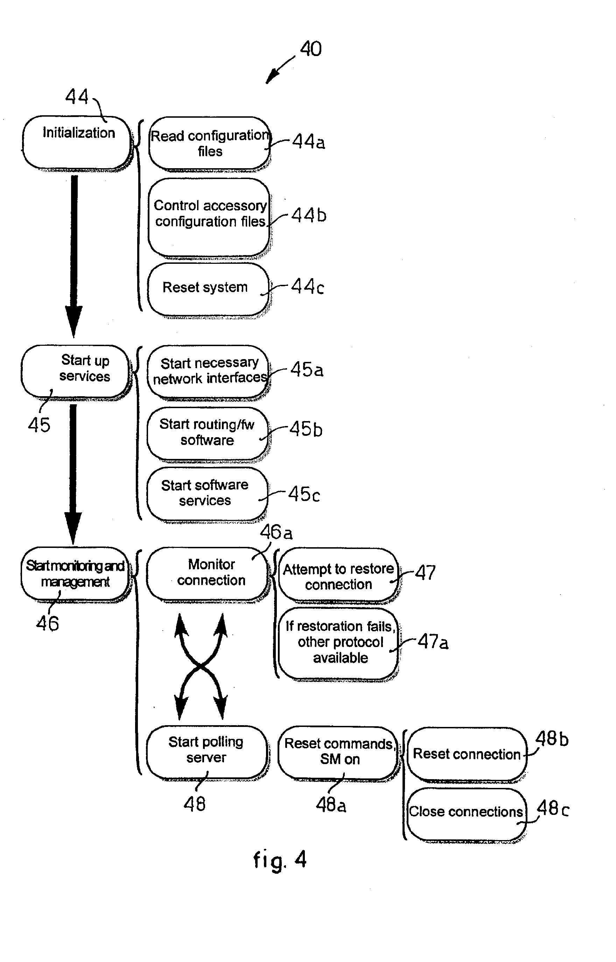

According to a variant, the method 40 (fig. 4) comprises a step 44 to initialize the processing unit 12, the modem concentrator 13 (sub-step 44a) and the expansion module 14 (sub-step 44b) and to interrupt all the possible active connections 16 (sub-step 44c).

Based on these conditions, the start-up step 45 provides to activate (sub-step 45a) the modem concentrator 13, particularly the connection devices 27, and also one of the connections 16. Services of a conventional type are also activated (sub-step 45b and 45c), such as security services (firewall), addressing services (routing), dynamic assignation of the address of the electronic device 11 or 111 (Dynamic Host Configuration Protocol) and Virtual Private Network services(VPN).

At the end of the start-up step 45 a monitoring and management step 46 follows, wherein the connection 16 is monitored (sub-step 46a). If the connection 16 is inactive, it can be restored (step 47) or in the event of a failed restoration, another of the connections 16 is activated (sub-step 47a). During the monitoring and management step 46 a step 48 is provided during which the user can intervene on the connection, varying one or more characteristics thereof. The sub-step 48a allows to manage commands to reset (sub-step 48b) the connection or to close the connection (sub-step 48c).

It is clear that modifications and/or additions of parts may be made to the apparatus 10 and relative method 40 as described heretofore, without departing from the field and scope of the present invention.

It is also clear that, although the present invention has been described with reference to some specific examples, a person of skill in the art shall certainly be able to achieve many other equivalent forms of method for the transmission and reception of data, and relative apparatus, having the characteristics as set forth in the claims and therefore all coming within the field of protection defined thereby.

## Claims

1. Method for the transmission and reception of data between at least two electronic devices (11, 111), selectively connected by means of a plurality of connections (13, 16), comprising the following steps:
- a connection step (42) during which a connection (13, 16) is activated between said electronic devices (11, 111):
- a verification step (43) during which it is verified if said connection (13, 16) is active;
**characterized in that** each of said connections (13, 16) comprises a plurality of communication channels (22, 23, 24, 25) having a corresponding plurality of respective communication protocols, and **in that** the method also comprises a selection step (41), wherein the protocol is selected from said plurality of respective communication protocols at least according to the band required for transmission, or to the security required for the transmission of the data, or to the availability of said connections (13, 16).

2. Method as in claim 1, **characterized in that** said selection step (41) precedes said connection step (42).

3. Method as in claim 1, **characterized in that** if in said verification step (43) it is verified that said connection (13, 16) is not active, that is, in the case of a negative verification, said selection step (41) follows said verification step (43).

4. Method as in claim 3, **characterized in that** said connection step (42) follows said selection step (41) so as to selectively restore the same connection (13, 16) previously activated or, alternatively, a different connection (13, 16) which comprises a plurality of communication channels substantially different from that of said connection (13, 16) previously activated.

5. Method as in any claim hereinbefore, **characterized in that** if said data define a flow of information, it provides that said flow of information is divided into a plurality of sub-flows.

6. Method as in claim 5, **characterized in that** said connection step (42) comprises at least a first sub-step during which said division occurs of said flow of information into a number of sub-flows of information, substantially equal to the number of said communication channels (22, 23, 24, 25), so that each of said communication channels (22, 23, 24, 25)is able to receive/transmit one of said sub-flows of information.

7. Method as in claim 5 or 5, **characterized in that** said connection step (42) comprises at least a second sub-step during which said flow of information is subjected to encryption.

8. Apparatus for the transmission and reception of data between at least a first electronic device (11) and at least a second electronic device (111), said apparatus comprising connection means (13, 16), and selection means (12), **characterized in that** said connection means (13, 16) comprise a plurality of communication channels (22, 23, 24, 25) having a corresponding plurality of respective communication protocols able to achieve said transmission and reception of data between said first electronic device (11) and said second electronic device (111), and **in that** said selection means (12) are able to selectively activate one or the other of said communication channels (22, 23, 24, 25) at least according to the band required for transmission, or to the security required for the transmission of the data, or to the availability of said connection means (13, 16).

9. Apparatus as in claim 8, **characterized in that** said connection means comprise connection means (16) and connection devices (13), and **in that** said connection devices (13) are able to selectively use one or the other of said connection means (16) in order to achieve the communication between said first (11) and said second (111) electronic device.

10. Apparatus as in claim 8 or 9, **characterized in that** each of said communication channels (22, 23, 24, 25) comprises a plurality of channels of a radio mobile system, for example GSM, UMTS, GPRS or other, able to be used simultaneously in order to transmit respective sub-flows of data transmitted between said first (11) and said second (111) electronic device.

11. Apparatus as in any claim from 8 to 10 inclusive,
**characterized in that** said selection means comprise at least a processing unit (12) having at least a microprocessor and at least a memory means.

12. Apparatus as in any claim from 9 to 11 inclusive,
**characterized in that** said connection devices (13) comprise a plurality of modules (28) able to transmit and receive the data by means of said connection means (16).
